# EUROPEAN PATENT APPLICATION

(11) **EP 4 485 609 A1**
(43) Date of publication of application: **01.01.2025**
(21) Application number: 23898385.2
(22) Date of filing: 01.12.2023
(51) Int. Cl.: H01M 10/0587, H01M 10/04, H01M 10/42

(54) **ELECTRODE ASSEMBLY AND SECONDARY BATTERY COMPRISING SAME**

(30) Priority: 01.12.2022 KR 20220165667
(71) Applicant: LG Energy Solution, Ltd., Seoul 07335 (KR)
(72) Inventor: KOO, Seongmo, Daejeon 34122 (KR); KIM, Young Soo, Daejeon 34122 (KR); KIM, Jaehee, Daejeon 34122 (KR); KIM, Taehyun, Daejeon 34122 (KR); LEE, Kwan Soo, Daejeon 34122 (KR); LEE, Byeongjoon, Daejeon 34122 (KR)
(74) Representative: Goddar, Heinz J.
(86) International application number: PCT/KR2023/019687
(87) International publication number: WO 2024/117862

(57) **Abstract**

Provided is a jelly-roll type electrode assembly in which a first separator, a negative electrode, a second separator, and a positive electrode are sequentially stacked and wound, wherein the positive electrode includes a first surface in a direction of a winding axis of the jelly-roll type electrode assembly, and a second surface opposite to the first surface, wherein a core part of the electrode assembly includes a separator overlapping portion in which the first separator and the second separator are overlapped and arranged in three or more folds between the positive electrode and the negative electrode facing the first surface of the positive electrode, and wherein an adhesive tape is located between the positive electrode and the first separator facing the second surface of the positive electrode or between the negative electrode and the first separator adjacent to the second surface of the positive electrode.

## Description

### [Technical Field]

This application claims priority to and the benefit of Korean Patent Application No. 10-2022-0165667 filed in the Korean Intellectual Property Office on December 01, 2022 and Korean Patent Application No. 10-2023-0171927 filed in the Korean Intellectual Property Office on December 01, 2023, the entire contents of which are incorporated herein by reference.

The present invention relates to an electrode assembly and a secondary battery including the same. Specifically, the present invention relates to an electrode assembly capable of preventing damage from a swelling of the electrode assembly to both a negative electrode and a separator positioned at an end portion of a positive electrode.

Additionally, a secondary battery implements such an electrode assembly the same.

### [Background Art]

In general, a secondary battery refers to a battery that is chargeable and dischargeable unlike a primary battery that are not chargeable, and the secondary battery is widely used in the field of high-tech electronic devices such as a phone, a laptop computer and a camcorder.

The stability of the secondary battery may be secured by a test for stability in which one surface is compressed with a press to measure an internal short.

Depending on a shape of a battery case, the secondary battery is classified into a cylindrical battery and a prismatic battery in which an electrode assembly is embedded in a cylindrical or prismatic metal battery case, and a pouch-type battery in which an electrode assembly is embedded in a pouch-type battery case made of an aluminum laminate sheet.
the electrode assembly embedded in the battery case is a chargeable/dischargeable power generating device having a structure in which a positive electrode, a separator and a negative electrode are stacked, and is classified into a folding-type electrode assembly (jelly-roll) in which a separator is interposed between a positive electrode and a negative electrode, each of which is provided in the form of a long sheet coated with an active material, and then, the positive electrode, the separator, and the negative electrode are wound, and a stack-type electrode assembly in which a plurality of positive electrodes and negative electrodes having predetermined sizes are sequentially stacked with separators interposed therebetween. Among them, the jelly-roll has advantages in that it is easy to manufacture and has a high energy density per weight.

A jelly-roll type electrode assembly may be formed by winding a positive electrode and a negative electrode, and in this case, the positive electrode and the negative electrode are wound in a state in which a separator is interposed therebetween. However, as the charging/discharging cycle repeated hundreds to thousands of times proceeds, the jelly-roll type electrode assembly is subjected to contraction and expansion, and thus bending deformation of an end portion of the positive electrode in the center is caused, resulting in cracks and causing disconnection or short to greatly impair the safety of the secondary battery.

### [Detailed Description of the Invention]

### [Technical Problem]

The present invention has been made in an effort to provide an electrode assembly capable of preventing an electrode end from cracking a separator and another electrode surface during contraction/expansion of the electrode resulting from charging/discharging of a secondary battery, and a secondary battery including the same.

### [Technical Solution]

An exemplary embodiment of the present invention provides a jelly-roll type electrode assembly in which a first separator, a negative electrode, a second separator, and a positive electrode are sequentially stacked and wound, wherein the positive electrode includes a first surface in a direction of a winding axis of the jelly-roll type electrode assembly, and a second surface opposite to the first surface, wherein a core part of the electrode assembly includes a separator overlapping portion in which the first separator and the second separator are overlapped and arranged in three or more folds between the positive electrode and the negative electrode facing the first surface of the positive electrode, and wherein an adhesive tape is located between the positive electrode and the first separator facing the second surface of the positive electrode or between the negative electrode and the first separator adjacent to the second surface of the positive electrode.

Another exemplary embodiment of the present invention provides a secondary battery including: the electrode assembly, a battery case opening on at least one surface and configured to accommodate the electrode assembly, and a cap assembly joined to the opening surface of the battery case.

Still another exemplary embodiment of the present invention provides a battery pack including the secondary battery.

Yet another exemplary embodiment of the present invention provides a moving means including the battery pack.

### [Advantageous Effects]

According to the exemplary embodiment of the present invention, the separator located in the center direction of the jelly-roll structure is provided in three or more folds at a portion corresponding to an end portion of a portion where the winding of the positive electrode begins. As a result, the cracking of the negative electrode is prevented at a portion in contact with the end portion of the positive electrode and disconnection or short is prevented, leading to improvement in safety of the secondary battery.

In addition, according to the exemplary embodiment of the present invention, the separator is provided with being overlapped in three or more folds on one surface of the positive electrode, and the separator and the adhesive tape are arranged with being overlapped in two folds on the other surface of the positive electrode, thereby preventing damage to the separator due to sliding of the positive electrode to prevent internal short of the secondary battery.

The adhesive tape having a porous structure between the separator and the negative electrode is located on the other surface of the positive electrode, so that lithium ions of the negative electrode can migrate smoothly through the separator and the adhesive tape, thereby preventing a decrease in capacity of the secondary battery due to the adhesive tape.

### [Brief Description of Drawings]

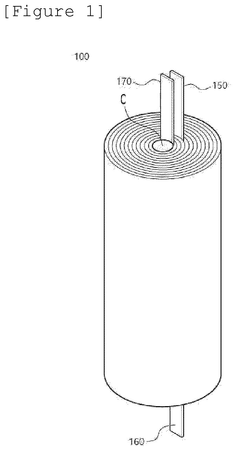

FIG. 1 is a perspective view showing an electrode assembly according to an exemplary embodiment of the present invention.
FIG. 2 is a top view of a jelly-roll type electrode assembly including a separator overlapping portion according to an exemplary embodiment.
FIG. 3 is an enlarged top view of a portion of the assembly of FIG. 2.

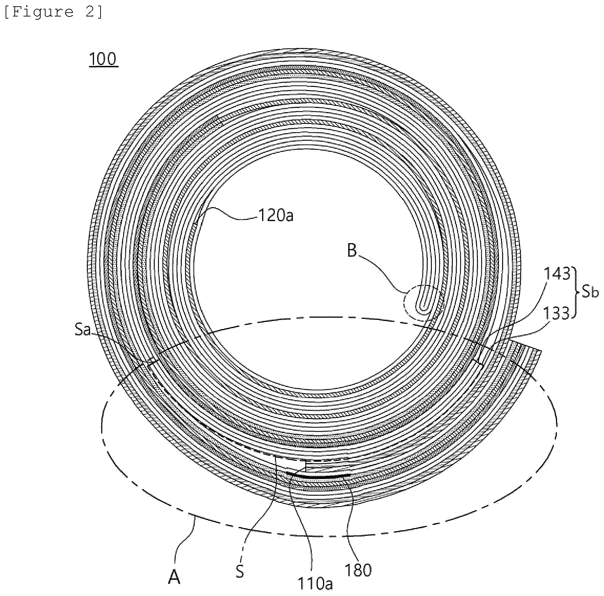

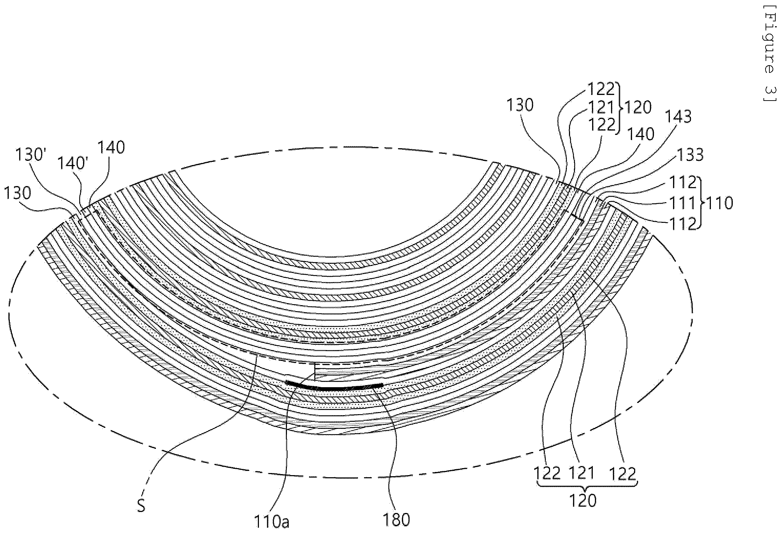

FIGS. 2 and 3 show a jelly-roll type electrode assembly including a separator overlapping portion according to an exemplary embodiment of the present invention.

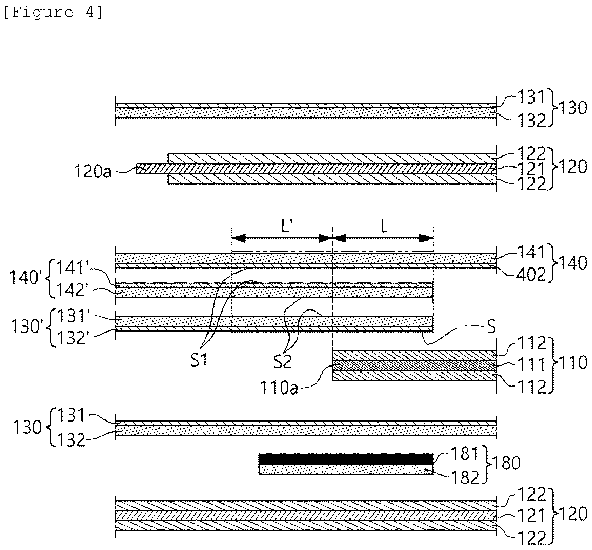

FIG. 4 schematically shows the separator overlapping portion of the jelly-roll type electrode assembly according to an exemplary embodiment of the present invention.

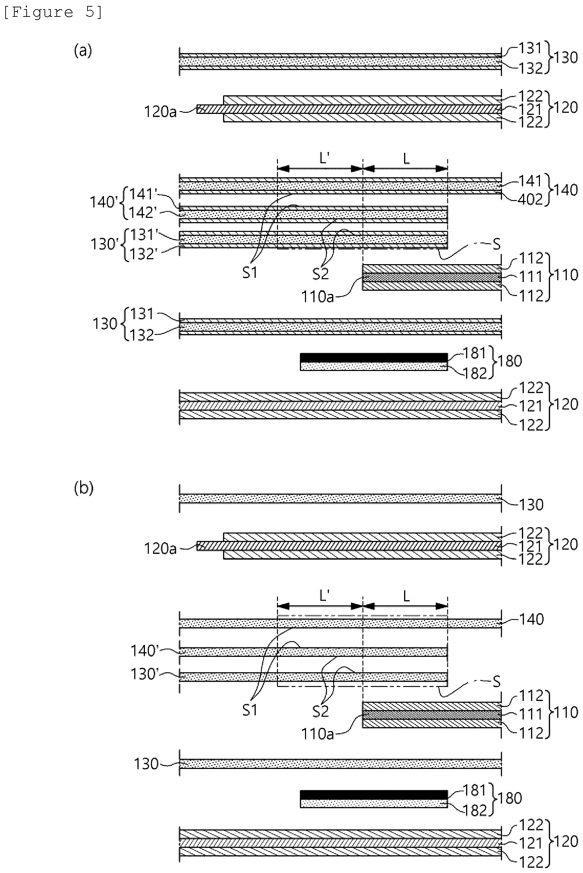

FIG. 5 schematically shows the separator overlapping portion of the jelly-roll type electrode assembly according to an exemplary embodiment of the present invention.

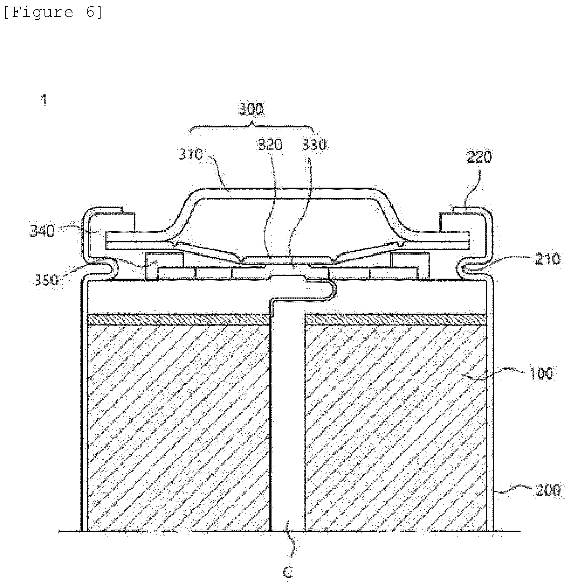

FIG. 6 is a cross-sectional view showing a secondary battery according to an exemplary embodiment of the present invention.

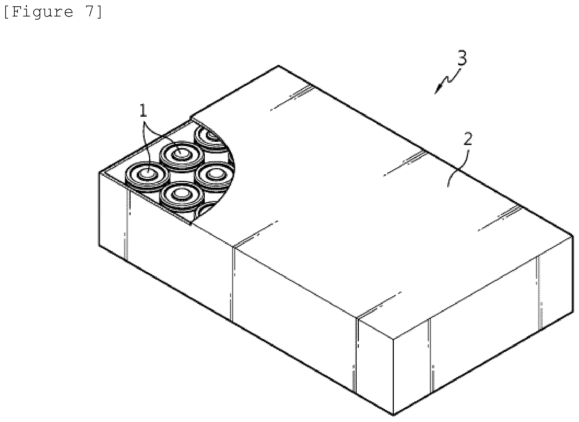

FIG. 7 is a perspective view showing a battery pack according to an exemplary embodiment of the present invention.

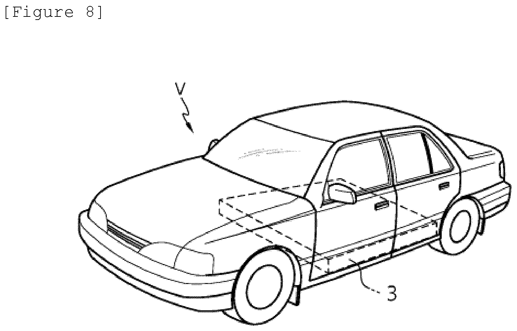

FIG. 8 is a perspective view showing a moving means according to an exemplary embodiment of the present invention.

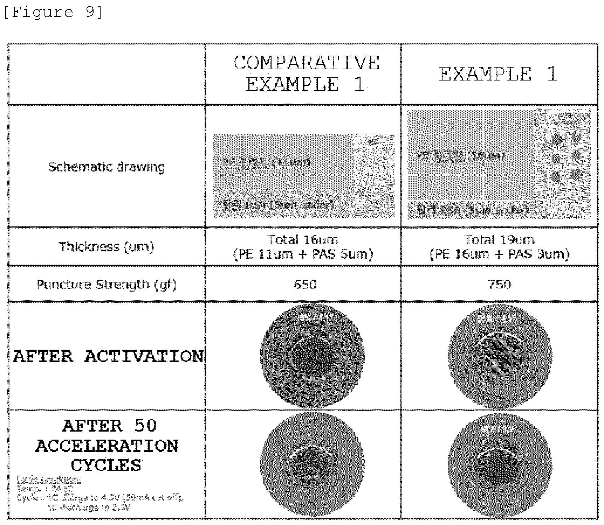

FIG. 9 is a CT image showing results of cycle stability evaluation for secondary batteries according to Example 1 and Comparative Example 1, depending on a thickness of an adhesive tape.

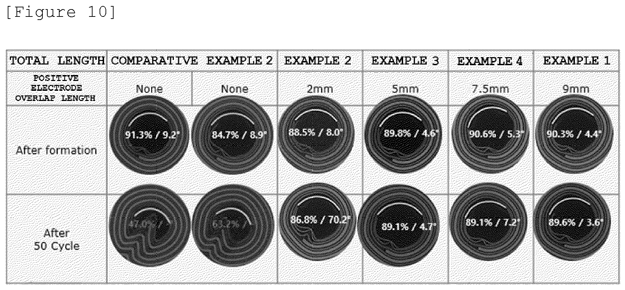

FIG. 10 is a CT image showing results of cycle stability evaluation for secondary batteries according to Examples 1 to 4 and Comparative Example 2, depending on a length of the adhesive tape.

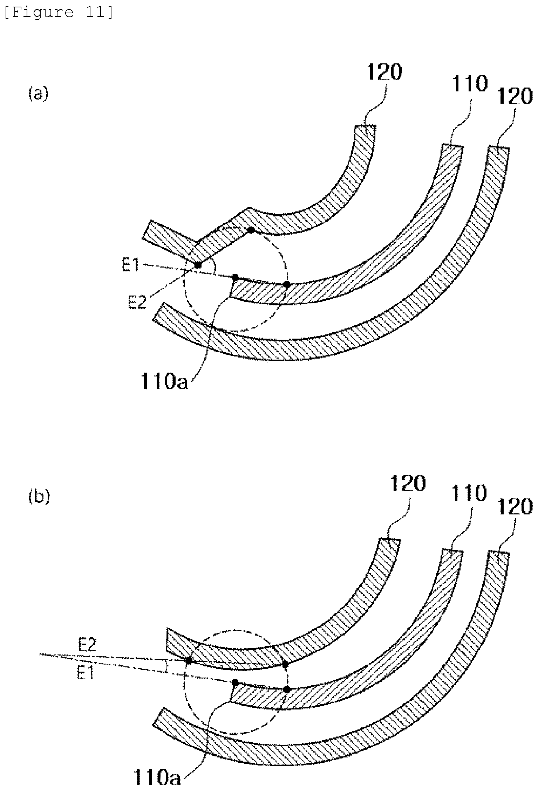

FIG. 11 shows a method for evaluating whether a separator at a core part of a jelly-roll type electrode assembly according to an exemplary embodiment of the present invention has been damaged.

### <Explanation of Reference Numerals and Symbols>

1: secondary battery
100: electrode assembly
110: positive electrode
110a: longitudinal end portion of positive electrode
111: positive electrode current collector
112: positive electrode active material
120: negative electrode
120a: longitudinal end portion of negative electrode
121: negative electrode current collector
122: negative electrode active material
130: first separator
131: first separator base layer
132: first separator coating layer
140: second separator
141: second separator base layer
142: second separator coating layer
143: longitudinal end portion of second separator
150: first electrode tab
160: second electrode tab
170: third electrode tab
180: adhesive tape
181: tape base layer
182: adhesive layer
200: battery case
210: beading part
220: crimping part
300: cap assembly
310: top cap
320: safety vent
330: current interruptive device
340: sealing gasket
350: CID gasket
C: core part
S: separator overlapping portion
B: bending point
S1: first interface
S2: second interface
Sa: one circumferential end
Sb: one circumferential end opposite to the circumferential end Sa
L, L': spacing distance between longitudinal end portion of separator overlapping portion and longitudinal end portion of positive electrode
E1: first extension line
E2: second extension line

### [Best Mode]

The detailed description of the present invention is intended to completely explain the present invention to one skilled in the art. Throughout the specification, unless explicitly described to the contrary, when one component "comprises (includes)" another component or "characterized by" having a certain structure and a certain shape, this means that other components, structures, and shapes may be included without being excluded.

The present invention may be variously modified and may have various exemplary embodiments, and specific exemplary embodiments will be described in detail in the detailed description. However, the description of the exemplary embodiments is not intended to limit the contents of the present invention, but it should be understood that the present invention is to cover all modifications, equivalents and alternatives falling within the spirit and technical scope of the present invention.

Hereinafter, the present invention will be described in detail with reference to the drawings. However, it should be noted that the drawings are provided for illustrating the present invention, and the scope of the present invention is not limited by the drawings.

An electrode assembly 100 according to an exemplary embodiment of the present invention is a chargeable/dischargeable power generating device including an anode 110, a cathode 120, and separators 130 and 140. Separators 130 and 140 may be positioned an anode 120 and positioned between the cathode 120 and the anode 110. And, the separators may also be positioned on one surface of the positive electrode 110 and/or on one surface of the negative electrode 120, or in any combination thereof.

In an exemplary embodiment, the electrode assembly 100 may include a jelly-roll structure in which the positive electrode 110, the first separator 130, the negative electrode 120, and the second separator 140 are stacked and then wound. That is, before winding the electrode assembly 100, the positive electrode 110, the first separator 130, the negative electrode 120, and the second separator 140 may be stacked in corresponding order.

One end portion 110a of the positive electrode may extend in a longitudinal direction and may define a freeedge shape. With this, an area of an unnecessary uncoated portion on a positive electrode current collector can be reduced to secure economic efficiency, and a slitting process can be performed after forming an active material layer on an electrode, so that a roll-to-roll process including the slitting process and a winding process can be performed more efficiently.

The slitting process is a process of cutting electrodes to a certain width using a cutter. At this time, a certain width means the height of the electrode assembly.

The roll-to-roll process can refer to any process using rolls. For example, when manufacturing electrode assemblies, the electrodes and separators are provided on rolls. The electrodes and separator are fed to the winding core as they are unwound from the roll and can be wound around the winding core.

The winding process refers to a process in which the electrode and the separator are winded in the winding core.

The positive electrode 110 may include a positive electrode current collector 111, a positive electrode active material layer, and a positive electrode uncoated portion. The positive electrode current collector 111 is not particularly limited as long as it has conductivity without causing a chemical change in the battery. Specifically, for the positive electrode current collector 111, stainless steel, aluminum, nickel, titanium, fired carbon, aluminum or stainless steel each surface-treated with carbon, nickel, titanium, silver, or the like, or the like may be used. That is, the positive electrode current collector 111 may be provided in the form of surface-treated stainless steel, aluminum foil or the like.
the positive electrode current collector 111 may typically have a thickness of 3 to 50 um, and a surface of the current collector may be formed with microscopic irregularities to enhance adhesion of the positive electrode active material. For example, the positive electrode current collector may be used in various forms such as a film, a sheet, a foil, a net, a porous body, a foamed body, and a non-woven fabric body.

The positive electrode 110 is coated with a positive electrode active material on one or more of both surfaces of the positive electrode current collector 111. A region coated with the positive electrode active material is a positive electrode active material layer 112, and a region not coated with the positive electrode active material is a positive electrode uncoated portion. Since the positive electrode active material layer 112 is not applied to the positive electrode uncoated portion, a first electrode tab 150 can be bonded to the positive electrode current collector 111.

The positive electrode active material may include a lithium cobalt oxide with a high operating voltage and excellent capacity characteristics, a lithium nickel oxide with a high reversible capacity and easy to implement a large-capacity battery, a lithium nickel cobalt oxide where a part of nickel is substituted with cobalt, a lithium nickel cobalt metal oxide where a part of nickel is substituted with manganese, cobalt, or aluminum, a lithium manganese-based oxide excellent in thermal stability and low in cost, a lithium iron phosphate excellent in stability, and the like.

Specifically, the positive electrode active material may be a layered compound such as a lithium cobalt oxide (LiCoO₂) and a lithium nickel oxide (LiNiO₂), or a compound substituted with one or more transition metals; a lithium iron oxide such as LiFe₃O₄; a lithium manganese oxide represented by chemical formula Li₁₊ₓMn₂₋ₓO₄ (0≤x≤0.33) such as LiMnO₃, LiMn₂O₃ and LiMnO₂; a lithium copper oxide (Li₂CuO₂) ; a vanadium oxide such as LiV₃O₈, V₂O₅ and Cu₂V₂O₇; a Ni-site type lithium nickel oxide represented by chemical formula LiNi_{2-y}M_{y}O₂ (where M is at least one selected from the group consisting of Co, Mn, Al, Cu, Fe, Mg, B, and Ga, and satisfies 0.01≤y≤0.3); a lithium manganese composite oxide represented by chemical formula LiMn_{2-z}M_{z}O₂ (where M is at least one selected from the group consisting of Co, Ni, Fe, Cr, Zn and Ta, and satisfies 0.01≤z≤0.1) or Li₂Mn₃MO₈ (where M is at least one selected from the group consisting of Fe, Co, Ni, Cu and Zn.); LiMn₂O₄ in which a part of Li of the chemical formula is substituted with an alkaline earth metal ion, or the like, but is not limited thereto. The positive electrode may be Li metal.

According to an exemplary embodiment of the present invention, the positive electrode active material layer 112 may further include a positive electrode conductive material and a positive electrode binder. The positive electrode conductive material is used to impart conductivity to the electrode, and can be used without particular limitation as long as it does not cause a chemical change and has electronic conductivity in a battery to be configured. Specific examples of the positive electrode conductive material may include graphite such as natural graphite or artificial graphite; a carbon-based material such as carbon black, acetylene black, Ketjen black, channel black, furnace black, lamp black, thermal black and carbon fiber; metal powders or metal fibers such as copper, nickel, aluminum and silver; a conductive whisker such as zinc oxide and potassium titanate; a conductive metal oxide such as titanium oxide; or a conductive polymer such as polyphenylene derivative. Other materials similar to the foregoing, as well as any combination of such materials, may be used as the positive electrode conductive material.

In addition, the positive electrode binder serves to improve attachment between particles of the positive electrode active material and adhesive force between the positive electrode active material and the positive electrode current collector. Specific examples may include polyvinylidene fluoride (PVDF), vinylidene fluoridehexafluoropropylene copolymer (PVDF-co-HFP), polyvinyl alcohol, polyacrylonitrile, carboxymethylcellulose (CMC), starch, hydroxypropylcellulose, regenerated cellulose, polyvinylpyrrolidone, tetrafluoroethylene, polyethylene, polypropylene, ethylene-propylene-diene polymer (EPDM), sulfonated-EPDM, styrene butadiene rubber (SBR), fluoro rubber, or various copolymers thereof, and the like, and any one thereof or a mixture of two or more thereof may be used.

The negative electrode 120 may include a negative electrode current collector 121, a negative electrode active material layer, and a negative electrode uncoated portion. The negative electrode current collector 121 may include a metal thin plate with excellent conductivity, for example, copper (Cu) or nickel (Ni) foil.

The negative electrode 120 is coated with a negative electrode active material on one surface or both surfaces of the negative electrode current collector 121. The negative electrode active material layer 122 is formed by coating or applying the negative electrode active material, and the negative electrode uncoated portion is a region where the negative electrode active material is not coated or applied and the negative electrode current collector is exposed. Since no negative electrode active material is applied to the negative electrode uncoated portion, a second electrode tab 160 can be bonded to the negative electrode current collector 121.

The negative electrode active material may be, for example, a carbon material such as crystalline carbon, amorphous carbon, carbon composite, or carbon fiber, lithium metal, a lithium alloy, or the like. In this case, the negative electrode active material may further include, for example, non-graphite-based SiO (silica), SiC (silicon carbide) or the like for high-capacity design.

The negative electrode active material layer 122 may include a negative electrode active material including one or more selected from the group consisting of a siliconbased material and a carbon-based material. In addition, the negative electrode active material layer 122 may further include a negative electrode conductive material and a negative electrode binder, and for the negative electrode active material, the negative electrode conductive material, and the negative electrode binder, materials that are used in the art may be used without limitation.

According to an exemplary embodiment of the present invention, the negative electrode current collector 121 is not particularly limited as long as it has conductivity without causing a chemical change in the battery. For example, for the negative electrode current collector 121, copper, stainless steel, aluminum, nickel, titanium, fired carbon, aluminum or stainless steel each surface-treated with carbon, nickel, titanium, silver, or the like, or the like may be used. Specifically, transition metals that adsorb carbon well, such as copper and nickel, may be used for the negative electrode current collector 121. A thickness of the negative electrode current collector 121 may be 6 um or greater and 80 um or less. However, the thickness of the negative electrode current collector 121 is not limited thereto.

According to an exemplary embodiment of the present invention, the negative electrode binder may include at least one selected from the group consisting of polyvinylidenefluoride-hexafluoropropylene copolymer (PVDF-co-HFP), polyvinylidenefluoride, polyacrylonitrile, polymethylmethacrylate, polyvinyl alcohol, carboxymethylcellulose (CMC), starch, hydroxypropylcellulose, regenerated cellulose, polyvinylpyrrolidone, tetrafluoroethylene, polyethylene, polypropylene, polyacrylic acid, ethylene-propylene-diene monomer (EPDM), sulfonated EPDM, styrene butadiene rubber (SBR), fluoro rubber, poly acrylic acid, and the above-mentioned materials in which a hydrogen is substituted with Li, Na, Ca, etc., and may also include various copolymers thereof.

According to an exemplary embodiment of the present invention, the negative electrode conductive material is not particularly limited as long as it has conductivity without causing a chemical change in the battery, and for example, graphite such as natural graphite or artificial graphite; carbon black such as acetylene black, Ketjen black, channel black, furnace black, lamp black, and thermal black; a conductive fiber such as a carbon fiber and a metal fiber; a conductive tube such as a carbon nanotube; metal powders such as fluorocarbon, aluminum, and nickel powder; a conductive whisker such as zinc oxide and potassium titanate; a conductive metal oxide such as titanium oxide; a conductive material such as polyphenylene derivative, and the like may be used.

The first electrode tab 150 and the second electrode tab 160 serve to transfer electrons collected in the current collectors to an external circuit, and may protrude in opposite directions with respect to the electrode assembly of the jelly-roll structure.

The separators 130 and 140 can prevent internal short that may occur when the positive electrode 110 and the negative electrode 120 come into contact. The separators 130 and 140 serve to separate the negative electrode 120 and the positive electrode 110 and to provide a migration path of lithium ions, in which any separator may be used as the separator without particular limitation as long as the separator is usually used in a secondary battery, and particularly, a separator having a high moisture-retention ability for an electrolyte as well as a low resistance to migration of electrolyte ions may be preferably used.

The separators 130 and 140 may include a porous material to facilitate migration of ions between electrodes. In an exemplary embodiment, the separators 130 and 140 may include a base layer made of a porous material. The base layers 131 and 141 may include, for example, any one selected from the group consisting of polyethylene (PE), polystyrene (PS), polypropylene (PP), and a copolymer of polyethylene (PE) and polypropylene (PP).

Alternatively, for the base layers 131 and 141, a porous polymer film, for example, a porous polymer film manufactured from a polyolefin-based polymer, such as an ethylene homopolymer, a propylene homopolymer, an ethylene/butene copolymer, an ethylene/hexene copolymer, and an ethylene/methacrylate copolymer, or a laminated structure having two or more layers thereof may be used. In addition, a typical porous non-woven fabric, for example, a non-woven fabric formed of high melting point glass fibers, polyethylene terephthalate fibers, or the like may be used. In addition, the separator may typically have a thickness of 10 um or greater and 20 um or less. A separator in which the above-described separator material is used as a base layer and a slurry containing a ceramic component or a polymer material so as to secure heat resistance or mechanical strength is coated on the base layer may be used. The separator having a single layer or multilayer structure may be selectively used.

In another exemplary embodiment, the separators 130 and 140 may include a safety reinforced separator (SRS). That is, the separators 130 and 140 may include base layers 131 and 141 made of a porous material and coating layers 132 and 142 coated and formed on the base layers by applying a mixed slurry of inorganic particles and a binder polymer. Preferably, the coating layers 132 and 142 includes ceramic particles and have a uniform pore structure formed by an interstitial volume between the ceramic particles that are components of an active layer, in addition to a pore structure of the separator base itself.

The coating layers 132 and 142 may include ceramic particles including at least one selected from the group consisting of alumina, silica, TiO₂, SiC and MgAl₂O₄. Such coating layers are included, so that the safety of the electrode assembly can be enhanced. The coating layer may further include a lithium salt.

In another exemplary embodiment, the separators 130 and 140 may include the coating layers 132 and 142 provided on at least one surface thereof, respectively, and the coating layers 132 and 142 include an inorganic component, a binder component, and a lithium salt. When the separators include the components described, the increase in internal resistance is not caused by elution of the lithium salt contained in the coating layers, despite the fact that the binder for improving adhesion to the electrode and the inorganic component for improving the mechanical strength of the separators are included, so excellent cell stability is obtained.

In addition, since the electrolyte solution impregnation level of the electrodes facing the separators 130 and 140 can be increased, advantageous performance in terms of long life may be obtained. Specifically, the coating layers 132 and 142 may include the inorganic component, and the coating layers 132 and 142 including the inorganic component are advantageous in terms of thermal shrinkage, as compared with a separator made of a simple polymer material. Therefore, the separators 130 and 140 including the inorganic component may have better hightemperature safety.

Specifically, the lithium salt may be substantially the same as that contained in an electrolyte solution of a lithium secondary battery, and may be, for example, one or two or more selected from the group consisting of LiCl, LiBr, LiI, LiClO₄, LiBF₄, LiB₁₀Cl₁₀, LiPF₆, LiCF₃SO₃, LiCF₃CO₂, LiAsF₆, LiSbF₆, LiAlCl₄, CH₃SO₃Li, CF₃SO₃Li, (CF₃SO₂) 2NLi, lithium chloroborane, lithium lower aliphatic carboxylate, lithium tetraphenyl borate.

The inorganic component is not particularly limited as long as it does not cause an oxidation and/or reduction reaction, i.e., an electrochemical reaction with a positive electrode or negative electrode current collector within an operating voltage range of the battery (e.g., 0 to 5 V based on Li/Li+) and does not impair conductivity, and may be, for example, one or two or more selected from the group consisting of BaTiO₃, Pb(Zr,Ti)O₃(PZT), Pb₁₋ₓLaₓZr_{1-y}Ti_{y}O₃(PLZT), Pb(Mg₃Nb_{2/3})O₃-PbTiO₃(PMN-PT), hafnia (HfO₂), SrTiO₃, SnO₂, CeO₂, MgO, NiO, CaO, ZnO, ZrO₂, Y₂O₃, Al₂O₃, and TiO₂.

The binder is not particularly limited as long as it is not easily dissolved by the electrolyte solution while exhibiting a bonding force with an electrode stacked on the separator and a bonding force between an inorganic component and a lithium salt in the mixed coating layer. For example, the binder may be one or a mixture of two or more selected from the group consisting of polyvinylidenefluoride (PVdF); polyvinylidenefluoride-co-hexafluoropropylene;polyvinylidenefluoride-co-trichloroethylene; polyvinylidenefluoride chlorotrifluoroethylene(PVdF-CTFE); polymethyl methacrylate; polyacrylonitrile; polyvinylpyrrolidone; polyvinylacetate; polyethylene-co-vinylacetate copolymer; polyethyleneoxide; cellulose acetate; cellulose acetate butyrate; cellulose acetate propionate; cyanoethylpullulan; cyanoethyl polyvinylalcohol; cyanoethyl cellulose; cyanoethyl sucrose; pullulan; carboxylmethyl cellulose; acrylonitrile-styrene-butadiene copolymer; and polyimide, and preferably may be PVdF or PVdF-CTFE.

In an exemplary embodiment of the present invention, the positive electrode 110 has a first surface facing toward a center (C, or core part) of the jelly-roll structure and a second surface facing away from the center (C) in a diameter direction of the jelly-roll structure. Here, the center (C) of the jelly-roll structure refers to a center of a circular structure when the jelly-roll structure is seen from above, and refers to a virtual region corresponding to a portion where winding begins.

Specifically, the 'core part' is a region including a hollow located on a winding axis of the electrode assembly, and a part of a stacked structure of the wound first separator/negative electrode/second separator/positive electrode, and may refer to a region within 2 turns of the positive electrode from one end portion, in the longitudinal direction, of the positive electrode located on the innermost side of the electrode assembly. In addition, the '1 turn' may refer to a length required to wind an electrode or separator included in an electrode assembly by 360° from a reference point, and the length may be determined depending on an outer diameter of a winding core used for winding the electrode assembly, a thickness of the electrode or separator, and the number of windings of the electrode or separator located on an inner side. For example, 1 turn of the positive electrode may refer to a length required to wind the positive electrode by 360° from a longitudinal end portion of the positive electrode in a direction in which the jelly-roll type electrode assembly is wound, such a direction being either clockwise or counterclockwise when viewed from above.

The electrode assembly 100 includes a separator overlapping portion S, illustrated in FIG. 3, where the separators 130 and 140 are overlapped in three or more folds between one surface of the positive electrode 110 and the negative electrode 120, specifically, the negative electrode current collector 121 (or negative electrode uncoated portion) at an end portion on the innermost side of the positive electrode 110, i.e., at an edge portion of the positive electrode adjacent to the center (C) of the jelly-roll structure. That is, the separators 130 and 140 in three or more folds are arranged between the first surface of the positive electrode 110 and the negative electrode 120 facing the first surface of the positive electrode 110. An adhesive tape 180 is arranged between the second surface of the positive electrode 110 and the negative electrode 120.

The electrode assembly 100 according to an exemplary embodiment of the present invention includes the separator overlapping portion S, thereby suppressing sliding of the electrode during charging and discharging of the battery to prevent damage to the negative electrode and the separator from deformation of the electrode assembly due to contraction/expansion of the electrode. In addition, even when the separator is damaged, the separator overlapping portion can prevent an internal short between the positive electrode and the negative electrode to improve the battery stability and the life characteristics.

A length of the separator overlapping portion S may be 50% based on 100% of a circumference of the electrode assembly 100, i.e., the separator overlapping portion S may extend 180° around the electrode assembly. Preferably, the length of the separator overlapping portion S may be a half turn or more of the core part C of the electrode assembly 100. More preferably, the length of the separator overlapping portion S may be 6 mm or more from the end portion of the positive electrode 110 adjacent to the core part C in an opposite direction to a direction in which the core part C of the electrode assembly 100 is located.

The electrode assembly 100 may be formed by fixing the separators 130 and 140 to a winding core (not shown), supplying the negative electrode 120 and the positive electrode 110 to the core in corresponding order and winding the same. Therefore, the first separator 130, the second separator 140, and the negative electrode 120 may be located at the front end of the end portion of the positive electrode 110. In other words, the first separator 130, the second separator 140, and the negative electrode current collector 121 may be formed extending to the front end of the end portion of the positive electrode 110, and the first separator 130 and the second separator 140 may be formed extending to the front end of the end portion of the negative electrode current collector 121. Here, the end portions of the positive electrode 110 and the negative electrode 120 refer to end portions located adjacent to the winding core in the longitudinal direction of the positive electrode 110 and the negative electrode 120.

In addition, in the electrode assembly 100, the core part C may be formed at the center of the electrode assembly 100 by removing the winding core after the negative electrode 120, the positive electrode 110, and the separators 130 and 140 are wound.

In other words, at the core part C of the electrode assembly, the first separator 130, the negative electrode 120, and the second separator 140 may extend longer than a longitudinal end portion of the positive electrode 110 and may be additionally wound. Specifically, the first separator 130, the negative electrode 120, and the second separator 140 may extend longer than the longitudinal end portion 110a of the positive electrode and may be additionally wound.

The first separator 130, the negative electrode 120 and the second separator 140 are initially wound together, and then the positive electrode 110 may start at longitudinal end portion 110a and be wound with the first separator 130, negative electrode 120, and the second separator 140. For example, after the first separator 130, the negative electrode 120, and the second separator 140 are wound around the winding core by one or more turns, the first separator, the negative electrode, and the second separator may be wound together with the positive electrode 110. That is, at the core part C of the jelly-roll type electrode assembly, longitudinal end portions 133, 120a, and 144 of the first separator 130, the negative electrode 120, and the second separator 140 may be located on inner sides with respect to the longitudinal end portion 110a of the positive electrode.

A length and a width of the negative electrode 120 may be greater than those of the positive electrode 110, and lengths and widths of the first separator 130 and the second separator 140 located on one surface and an opposite surface of the negative electrode 120 may also be greater than those of the positive electrode. When the first separator 130, the negative electrode 120, and the second separator 140 extend longer than the longitudinal end portion 110a of the positive electrode and are additionally wound, lithium ions can be more easily transferred from the positive electrode to the negative electrode in a chemical reaction of the lithium-ion battery. When the length or width of the negative electrode is formed greater, an area of the negative electrode for receiving lithium ions increases to prevent a decrease in charge/discharge efficiency and to improve the stability and lifetime characteristics of the battery.

The separators 130 and 140 located at the front ends of the end portions of the negative electrode 120 and the positive electrode 110 may be bent once or more at the front end of the negative electrode 120 located on the center side of the jelly-roll structure. In other words, the separators 130 and 140 may be located at the core part C of the electrode assembly 100 in a form of being bent once or more.

The separators 130 and 140 that are bent once or more, and thus, have different winding directions may be stacked on one surface of the positive electrode 110. The separators 130 and 140 extending from the end portion of the negative electrode may be bent in an opposite direction to a direction facing the winding axis of the negative electrode and stacked on one surface of the positive electrode 110. Therefore, the separators 130 and 140 may be overlapped threefold in order of the second separator 140, the second separator 140, and the first separator 130 on one surface of an edge portion of the positive electrode 110 adjacent to the center of the electrode assembly 100.

In other words, the separators 130 and 140 are positioned circumferentially around the core part C of the electrode assembly 100, and are bent over each other at a bend point B such that the first and second separators 130 and 140 extend in both clockwise and counterclockwise directions from that bend point B.

The separators 130 and 140 are bent around each other at least once, and thus, have different winding directions (clockwise and counterclockwise directions) for at least a portion of the electrode assembly 100. The separators 130 and 140 may be stacked on one surface of the positive electrode 110. The separators 130 and 140 extending in a first clockwise direction at the end portion 120a of the negative electrode may be bent around each other to extend in an opposite counterclockwise direction relative to the winding axis, and may be stacked on one surface of the positive electrode 110. Therefore, the separators 130 and 140 may be overlapped to form four layers, and then the first separator 130 may be split into two layers around the positive electrode 110 to form three separator layers within the separator overlapping region S.

In this case, the second separator 140' located between the second separator 140 and the first separator 130 is the second separator 140' that is located on one surface of the negative electrode 120 as a result of the second separator 140 being bent once or more at the front end of the edge portion of the positive electrode. That is, in the separator overlapping portion S, the second separator 140 located closest to the positive electrode 110 and the second separator 140 extending from the longitudinal end portion of the negative electrode 120 at the core part of the electrode assembly 100 may be in direct contact with each other. In other words, the separator overlapping portion S may the portion of the second separator 140 located radially inwardly closest to the positive electrode 110 and the portion of the second separator 140' located radially further from the positive electrode 110 may be in direct contact with each other.
the core part C of the electrode assembly may include a separator overlapping portion between the positive electrode and the negative electrode facing a first surface of the positive electrode, and the separator overlapping portion may include the separators that are overlapped and arranged are in three or more folds.
the core part C of the electrode assembly may include a separator overlapping portion S between the positive electrode 110 and the negative electrode 120 facing a first surface of the positive electrode, and the separator overlapping portion S may refer to a part of a region where the separators that are overlapped and arranged are in three or more folds, with respect to the longitudinal end portion 110a of the positive electrode. Here, the separator overlapping portion S may refer to a region up to an end portion of a region where the separators that are overlapped and arranged are in three or more folds, i.e., a region up to a longitudinal end portion of the separator overlapping portion S, and a region having the same length in a direction of the core part of the electrode assembly, with respect to the longitudinal end portion 110a of the positive electrode. In other words, the separator overlapping portion S may refer to a region having one circumferential end Sa defined at a location where the presence of the three or more abutting layers of the separator terminates. The separator overlapping portion S may extend from that circumferential end Sa along those three abutting layers of separator to an opposing circumferential end Sb, where the opposing circumferential end Sb is defined by a location spaced away from the longitudinal end portion 110a of the positive electrode 110 by the same length that the one circumferential end Sa is spaced away from the longitudinal end portion 110a.

FIG. 4 illustrates various relationships between the electrodes and separators disclosed herein. As shown in that figure, the separator overlapping portion S may refer to a region ranging from a longitudinal end portion of the separator overlapping portion S to a point at which a length L' in the direction of the core part of the electrode assembly with respect to the longitudinal end portion 110a of the positive electrode is the same as a spacing distance L between the longitudinal end portion of the separator overlapping portion and the longitudinal end portion of the positive electrode, i.e., a region having a length (L+L'=L+L=2L) from the longitudinal end portion of the separator overlapping portion S.

According to an exemplary embodiment of the present invention, the separator overlapping portion may be formed by overlapping and arranging the first separator 130 and the second separator 140 extending from the longitudinal end portion 120a of the negative electrode at the core part C of the electrode assembly. Specifically, the separator overlapping portion S may be formed by overlapping and arranging the first separator 130 and the second separator 140 extending from the longitudinal end portion 120a of the negative electrode at the core part C of the electrode assembly, and the first separator 130 and the second separator 140 may include a region extending from the longitudinal end portion 120a of the negative electrode. That is, the first separator 130 and the second separator 140 may extend longer than the longitudinal end portion 120a of the negative electrode and may be additionally wound.

In other words, the first separator 130 and the second separator 140 are wound by a predetermined length, which may be then wound together with the negative electrode 120. The first separator 130 and the second separator 140 extending from the longitudinal end portion 120a of the negative electrode may be parts of the first separator 130 and the second separator 140 wound earlier than the negative electrode 120. The first separator 130 and the second separator 140 extending from the longitudinal end portion 120a of the negative electrode may include the first separator 130' and second separator 140' extending opposite to the winding direction. Such a bending and overlapping of separators forms the separator overlapping portion S.

The separator overlapping portion can be formed by the bending structure integrally extending from the first separator and the second separator, without providing a separate auxiliary separator. With this, the separator constituting the separator overlapping portion can be controlled to be in three or more folds by the simpler structure. In addition, when the separator overlapping portion is formed by overlapping and arranging the first separator and the second separator extending from the longitudinal end portion of the negative electrode, it is possible to prevent damage to the negative electrode and the separator from deformation of the electrode assembly due to contraction/expansion of the electrode. In addition, even when the separator is damaged, the separator overlapping portion can prevent an internal short between the positive electrode and the negative electrode to improve the stability and life characteristics of the battery.

According to an exemplary embodiment of the present invention, the first separator and the second separator may extend from the longitudinal end portion of the negative electrode at the core part of the electrode assembly, may be bent together in an opposite direction to a direction facing a winding axis of the negative electrode, and may be overlapped and arranged between the positive electrode and the second separator facing the first surface of the positive electrode. Specifically, the first separator 130 and second separator 140 extending from the longitudinal end portion 120a of the negative electrode may be bent together in an opposite direction to a direction facing the winding axis of the negative electrode, i.e., toward the longitudinal end portion 110a of the positive electrode, and may be overlapped and arranged to form the separator overlapping portion S between the positive electrode 110 and the negative electrode 120 facing the first surface of the positive electrode. With this, it is possible to more easily control the facing direction of the separators constituting the separator overlapping portion while allowing the separators constituting the separator overlapping portion to be in three or more folds by the simpler bending structure.

As described above, the separator overlapping portion S may be stacked in order of the first separator 130, the second separator 140, and the second separator 140 based on one surface of the positive electrode 110. The separator overlapping portion S may include a first interface and a second interface. The first interface refers to a surface where the second separators 140 are in direct contact with each other, and the second interface refers to a surface where the second separator 140 and the first separator 130 are in direct contact with each other.

Specifically, the separator overlapping portion S may include the separators that are overlapped and arranged and are in three or more folds, may include one or more of each of the first separators 130 and the second separators 140 and 140', and may include a first interface S1 where the second separator 140 and the second separator 140' are in direct contact with each other, and a second interface S2 where the second separator 140' and the first separator 130 are in direct contact with each other. In other words, the separator overlapping portion may include an overlapping structure of a plurality of separators such as the first separator and the second separator, rather than an overlapping structure of a single separator, and may include the interfaces at each of which the separators are in contact with each other. Since the separator overlapping portion includes the plurality of interfaces, it is possible to easily control the facing direction of the separators and the friction coefficient of each interface by the simpler bending structure.

According to an exemplary embodiment of the present invention, the first interface and the second interface each may have a friction coefficient of 0.4 or greater. Specifically, the friction coefficients of the first interface S1 and the second interface S2 may be 0.42 or greater, 0.44 or greater, or 0.46 or greater, respectively. In other words, the separator overlapping portion includes the overlapping structure of the plurality of separators such as the first separator and the second separator, rather than an overlapping structure of a single separator, and includes a plurality of interfaces at each of which the separators are in contact with each other, and in this case, the friction coefficients of the plurality of interfaces may be each controlled beyond a specific range. When the friction coefficients of the first interface and the second interface satisfy the above range, it is possible to suppress the sliding of the positive electrode by the first separator and the second separator integrally formed with the separator overlapping portion during charging and discharging of the battery, and to prevent damage to the negative electrode and the separator from deformation of the electrode assembly due to contraction/expansion of the electrode. Here, the friction coefficient (µ) may refer to a static friction coefficient measured in accordance with the ASTM D 1894 standard, may be measured in a dry method, and may have a larger value when measured by a wet method of immersing a specimen in distilled water or an electrolyte solution.

In another exemplary embodiment, the friction coefficient of the first interface and the second interface of the electrode assembly 100 may be different. Preferably, the friction coefficient of the first interface may be greater than the friction coefficient of the second interface. More preferably, the friction coefficient of the first interface may be 0.6 or greater, and the friction coefficient of the second interface may be 0.4 or greater. Specifically, the friction coefficients of the first interface S1 and the second interface S2 may be different from each other, depending on a type and a facing direction of the first separators 130 and 130' and the second separators 140 and 140' facing each other. More specifically, the friction coefficient of the first interface S1 may be 0.62 or greater, or 0.66 or greater, and the friction coefficient of the second interface S2 may be 0.42 or greater, 0.44 or greater, or 0.46 or greater. When the friction coefficients between the interfaces of the separators included in the separator overlapping portion are controlled within the above ranges, it is possible to suppress the sliding of the electrode during charging and discharging of the battery, to prevent damage to the negative electrode and the separator from deformation of the electrode assembly due to contraction/expansion of the electrode. In addition, even when the separator is damaged, the separator overlapping portion can prevent an internal short between the positive electrode and the negative electrode to improve the battery stability and the life characteristics.

According to an exemplary embodiment of the present invention, each of the first separator and the second separator may include a coating layer provided on at least one surface thereof.

Specifically, the first separators 130 and 130' and the second separators 140 and 140' may include the coating layers 132, 132', 142 and 142' provided on one least surface thereof, and the base layer 131, 131', 141 and 141', respectively, and may each have a friction coefficient within a specific range by controlling a component, a content, and a particle size of the coating layer. Where 130' and 140' indicates the same separator is extending in an opposite direction to the winding direction due to the bending structure of the separators at the bend point B. Specifically, a friction coefficient between the coating layer and the coating layer and a friction coefficient between the base layer and the base layer of the separator may be greater than a friction coefficient between the coating layer and the base layer. In addition, the friction coefficients may be measured in a dry method, but may have a more significant difference when immersed in distilled water or an electrolyte solution, i.e., when measured in a wet method.

In the case of including the coating layer provided on at least one surface of each of the first separator and the second separator, the friction coefficient between the interfaces of the separators included in the separator overlapping portion is controlled to a specific range by controlling the facing direction of the coating layers provided on at least one surface of each of the first separator and the second separator, so that it is possible to suppress the sliding of the electrode during charging and discharging of the battery, and to prevent damage to the negative electrode and the separator from deformation of the electrode assembly due to contraction/expansion of the electrode.

According to an exemplary embodiment of the present invention, each of the first separator 130 and 130' and the second separator 140 and 140' may include a coating layer provided on at least one surface thereof. Specifically, referring to FIG. 4, the first separators 130 and 130' and the second separators 140 and 140' may have coating layers 132, 132', 142 and 142' provided on one surface, respectively. In addition, the surface of the first separator and the second separator provided with the coating layer may have a greater friction coefficient than the surface of the first separator and the second separator not provided with a coating layer. That is, the coating layer may increase the friction coefficient of the interface when provided on the separator. The friction coefficient between the interfaces of the separators included in the separator overlapping portion S is controlled to a specific range by controlling the facing direction of the coating layers provided on one surface of each of the first separator and the second separator, so that it is possible to suppress the sliding of the electrode during charging and discharging of the battery, and to prevent damage to the negative electrode and the separator from deformation of the electrode assembly due to contraction/expansion of the electrode.

According to an exemplary embodiment of the present invention, the first separator 130 and 130' and the second separator 140 and 140' may each have a friction coefficient within a specific range by controlling a component, a content, and a particle size of the coating layer.

According to an exemplary embodiment of the present invention, the first separator 130 and 130' and the second separator 140 and 140' may each include a coating layer provided on one surface thereof, and the first interface may be an interface at which the coating layer of the second separator 140 and 140' and the coating layer of the second separator are in direct contact with each other. Specifically, referring to FIG. 4, the first separators 130 and 130' and the second separators 140 and 140' may have coating layers 132, 132', 142 and 142' provided on one surface thereof, respectively, and the first interface S1 may be an interface at which the coating layer 142 of the second separator and the coating layer 142' of the second separator are in direct contact with each other. When the coating layer of the second separator 142 and the coating layer of the second separator 142' are in direct contact with each other, the friction coefficient between the coating layer and the coating layer of the separator may be greater than the friction coefficient between the base layer and the base layer or the friction coefficient between the coating layer and the base layer, and the friction coefficient of the first interface may have a larger value. When the coating layer of the second separator 142 and the coating layer of the second separator 142' are in direct contact at the first interface S1, the friction coefficient between the interfaces of the separators included in the separator overlapping portion S increases, so that it is possible to suppress the sliding of the electrode during charging and discharging of the battery, and thus, to prevent damage to the negative electrode and the separator from deformation of the electrode assembly due to contraction/expansion of the electrode.

According to an exemplary embodiment of the present invention, the first separator 130 and 130' and the second separator 140 and 140' may each include a coating layer provided on one surface thereof, and the second interface may be an interface at which a surface of the second separator not provided with a coating layer and a surface of the first separator not provided with a coating layer are in direct contact with each other. Specifically, referring to FIG. 4, the first separators 130 and 130' and the second separators 140 and 140' may have coating layers 132, 132', 142 and 142' provided on one surface thereof, respectively, and the second interface S2 may be an interface at which a surface of the second separator not provided with a coating layer, i.e., the second separator base layer 141', and a surface of the first separator not provided with a coating layer, i.e., the first separator base layer 131' are in direct contact with each other. When a surface of the second separator not provided with a coating layer and a surface of the first separator not provided with a coating layer are in direct contact with each other, the friction coefficient between the base layer and the base layer of the separator may be greater than the friction coefficient between the coating layer and the base layer, and the friction coefficient of the second interface may have a larger value. When the surface of the second separator not provided with a coating layer and the surface of the first separator not provided with a coating layer are in direct contact with each other at the second interface, the friction coefficient between the interfaces of the separators included in the separator overlapping portion increases, so that it is possible to suppress the sliding of the electrode during charging and discharging of the battery, and thus, to prevent damage to the negative electrode and the separator from deformation of the electrode assembly due to contraction/expansion of the electrode.

According to an exemplary embodiment of the present invention, the first interface may be an interface at which the second separator facing the first surface of the positive electrode and the second separator extending from the longitudinal end portion of the negative electrode at the core part of the electrode assembly are in direct contact with each other. Specifically, referring to FIGS. 2 to 4, the second separator 140' extending from the longitudinal end portion 120a of the negative electrode may be overlapped and arranged to form the separator overlapping portion S between the positive electrode 110 and the negative electrode 120 facing the first surface of the positive electrode. In this case, since the second separator 140 is located between the positive electrode 110 and the negative electrode 120 facing the first surface of the positive electrode, the extended second separator 140' may be in direct contact with the second separator 140 located between the positive electrode 110 and the negative electrode 120. That is, the first interface S1 at which the second separator 140 and the second separator 140' extending from the longitudinal end portion 120a of the negative electrode at the core part of the electrode assembly are in direct contact with each other may be formed. With this, it is possible to more easily control the facing direction of the separators constituting the separator overlapping portion and the frictional force at the interface while allowing the separators constituting the separator overlapping portion to be in three or more folds by the simpler bending structure.

According to an exemplary embodiment of the present invention, the second interface may be an interface at which the first separator extending from the longitudinal end portion of the negative electrode at the core part of the electrode assembly and the second separator extending from the longitudinal end portion of the negative electrode at the core part of the electrode assembly are in direct contact with each other. Specifically, referring to FIGS. 2 to 4, the first separator 130 extending from the longitudinal end portion 120a of the negative electrode and the second separator 140' extending from the longitudinal end portion of the negative electrode may be overlapped and arranged to form the separator overlapping portion S between the positive electrode 110 and the negative electrode 120 facing the first surface of the positive electrode. In this case, the second interface S2 at which the first separator 130' extending from the longitudinal end portion 120a of the negative electrode and the second separator 140' extending from the longitudinal end portion 120a of the negative electrode are in direct contact with each other may be formed. With this, it is possible to more easily control the facing direction of the separators constituting the separator overlapping portion and the frictional force at the interface while allowing the separators constituting the separator overlapping portion to be in three or more folds by the simpler bending structure.

FIG. 5 schematically shows a separator overlapping portion of the jelly-roll type electrode assembly according to an exemplary embodiment of the present invention. Specifically, FIG. 5(a) schematically shows a separator overlapping portion of a jelly-roll type electrode assembly including a first separator and a second separator each having coating layers on both surfaces, and FIG. 5(b) schematically shows a separator overlapping portion of a jelly-roll type electrode assembly including a first separator and a second separator without a coating layer.

According to an exemplary embodiment of the present invention, each of the first separator and the second separator may include a coating layer provided on at least one surface thereof. Specifically, referring to FIGS. 3 and 5(a), the first separators 130 and 130' and the second separators 140 and 140' may include the coating layers 132, 132', 142 and 142' provided on at least one surface thereof, respectively, and the base layers 131, 131', 141 and 141' may each have a friction coefficient within a specific range by controlling a component, a content, and a particle size of the coating layer. Specifically, a friction coefficient between the coating layer and the coating layer and a friction coefficient between the base layer and the base layer of the separator may be greater than a friction coefficient between the coating layer and the base layer. In addition, the friction coefficients may be measured in a dry method, but may have a more significant difference when immersed in distilled water or an electrolyte solution, i.e., when measured in a wet method.

In the case of including the coating layer provided on at least one surface of each of the first separator and the second separator, the friction coefficient between the interfaces of the separators included in the separator overlapping portion is controlled to a specific range by controlling the facing direction of the coating layers provided on at least one surface of each of the first separator and the second separator, so that it is possible to suppress the sliding of the electrode during charging and discharging of the battery, and to prevent damage to the negative electrode and the separator from deformation of the electrode assembly due to contraction/expansion of the electrode.

According to an exemplary embodiment of the present invention, each of the first separator and the second separator may include a coating layer provided on at least one surface thereof, and the coating layer may include an inorganic component, a binder component, and a lithium salt. When the separators include the components described, the increase in internal resistance is not caused by the elution of the lithium salt contained in the coating layer, despite the fact that the binder for improving adhesion with the electrode and the inorganic component for improving the mechanical strength of the separator are included, so excellent cell stability is obtained.

According to an exemplary embodiment of the present invention, a length of the separator overlapping portion may be 30% or more based on 100% of a circumference of the electrode assembly, i.e., the separator overlapping portion S may extend approximately 108° around the electrode assembly.

Specifically, the length of the separator overlapping portion may be 40% or more or 50% or more based on 100% of the circumference of the electrode assembly, i.e., the separator overlapping portion S may extend at least 144° around the electrode assembly.

Said another way, the separators layers may be bent about themselves to form a separator overlapping portion S of at least a 1/3 turn or 1/2 turn an inner circumferential surface of the core part of the electrode assembly.

Here, the circumference of the electrode assembly may refer to a circumference of the inner circumferential surface of the electrode assembly, and the 'circumference of the inner circumferential surface' may refer to a circumference of a virtual circle having the largest value as a radius among distances from the winding axis of the electrode assembly to the innermost layer in contact with the hollow of the electrode assembly. For example, the circumference of the inner circumferential surface of the electrode assembly may be about 10 mm, but is not limited thereto.

In addition, the length, in the longitudinal direction, of the separator overlapping portion may refer to a length of L+L'=L+L=2L. That is, the first separator extending from the longitudinal end portion of the negative electrode at the core part of the electrode assembly and the second separator extending from the longitudinal end portion of the negative electrode at the core part of the electrode assembly may be arranged over 1/6 turn or more or 1/4 turn or more from the longitudinal end portion of the positive electrode between the positive electrode and the negative electrode facing the first surface of the positive electrode, and in this case, the length, in the longitudinal direction, of the separator overlapping portion may be 1/3 turn or more or 1/2 turn or more. When the above-described length range, in the longitudinal direction, of the separator overlapping portion is satisfied, the frictional force between the interfaces of the separators included in the separator overlapping portion can suppress the sliding of the electrode during charging and discharging of the battery, thereby sufficiently preventing damage to the negative electrode and the separator from deformation of the electrode assembly due to contraction/expansion of the electrode.

According to an exemplary embodiment of the present invention, a spacing distance between the longitudinal end portion of the separator overlapping portion and the longitudinal end portion of the positive electrode may be 3 mm or longer. Specifically, referring to FIG. 3, a spacing distance L between the longitudinal end portion of the separator overlapping portion and the longitudinal end portion of the positive electrode may be 4 mm or longer, 5 mm or longer, or 6 mm or longer.

That is, the first separator 130 extending from the longitudinal end portion of the negative electrode at the core part of the electrode assembly and the second separator 140' extending from the longitudinal end portion 120a of the negative electrode at the core part of the electrode assembly may be arranged over 3 mm or longer from the longitudinal end portion 110a of the positive electrode between the positive electrode 110 and the negative electrode 120 facing the first surface of the positive electrode.

When the above-described length range in the longitudinal direction of the separator overlapping portion is satisfied, even when there is a process error with respect to introduction of the first separator and the second separator, the separator overlapping portion can be arranged between the positive electrode and the negative electrode facing the first surface of the positive electrode. In addition, the frictional force between the interfaces of the separators included in the separator overlapping portion can suppress the sliding of the electrode during charging and discharging of the battery, thereby sufficiently preventing damage to the negative electrode and the separator caused by deformation of the electrode assembly due to contraction/expansion of the electrode.

The electrode assembly 100 according to the present invention may further include a third electrode tab 170 at the core part (C). The third electrode tab 170 may be located at the front end of the longitudinal end portion of the positive electrode 110. In other words, the third electrode tab 170 may be in contact with the front end of the end portion in the direction of the core part C of the pocket-shaped separators 130 and 140.

The adhesive tape 180 is located on one surface of one surface of the first separator 130 facing the second surface of the positive electrode 110 and one surface of the negative electrode 120. In other words, the adhesive tape 180 may be stacked on one surface of the first separator 130 or one surface of the negative electrode 120 facing the edge portion of the positive electrode adjacent to the center of the jelly-roll structure.

The adhesive tape 180 may include a base layer having a porous structure, like the separators 130 and 140.

In the electrode assembly 100, the separators 130 and 140 in three or more folds may be overlapped between the first surface of the positive electrode 110 and the negative electrode 120, and the first separator 130 and the adhesive tape 180 in two folds may be overlapped between the second surface 110b of the positive electrode 110 and the negative electrode 120.

With this configuration, cracks and overheating that may occur from the end portion of the positive electrode 110 can be prevented. That is, as the demand for high energy density design increases, the electrode tab (second electrode tab or in tap) is bonded to the core part C of the electrode assembly 100 or the negative electrode active material contains more SiO, thereby inevitably increasing the density of the positive electrode and the stress at a step portion of the positive electrode. Here, the step portion of the positive electrode is a portion where a thickness of the positive electrode increases rapidly to 100 um to 200 um as the positive electrode is interposed at a beginning point of the positive electrode, and thus, a physical step is formed within the jelly-roll type electrode assembly, and corresponds to the edge portion 113 of the positive electrode 110 in the drawing.

For example, the in-tap is an electrode tab located on one side of the negative electrode uncoated portion close to the core portion. In other words, the in-tap refers to the electrode tab closest to the longitudinal end portion of negative electrode forming the core portion.

The stress increases at such a step portion of the positive electrode, and therefore, when the portion is continuously pressed during the contraction and expansion process due to charging and discharging, the separator at a portion in contact with the step portion is damaged, thereby increasing the risk of ignition due to crack or short. However, according to an exemplary embodiment of the present invention, as described above, the threefold separator is arranged on the first surface of the positive electrode 110 at the edge portion of the positive electrode, and the twofold separator and adhesive tape are arranged on the second surface of the positive electrode 110 at the edge portion of the positive electrode. Therefore, damage to the separator at the step portion of the positive electrode is prevented and a stable buffering action is possible, so that cracks and short caused by repetitive contraction and expansion at the end portion of the positive electrode where stress is high can be prevented, and the risk of ignition due to cracks and short can be prevented.

That is, as repeated charging and discharging cycles proceed hundreds to thousands of times, contraction and expansion of the electrode may occur. Due to this, bending deformation may be caused at the edge portion of the positive electrode 110, which may cause cracks in the electrode. However, the threefold separator is arranged on the first surface of the positive electrode 110 at the edge portion of the positive electrode, and the twofold separator and adhesive tape are arranged on the second surface of the positive electrode 110 at the edge portion of the positive electrode, so that not only cracks and short due to contraction and expansion of the edge portion of the positive electrode 110 but also ignition due to the cracks and short can be prevented. In particular, in the present exemplary embodiment, the threefold separator is arranged on the first surface and the twofold separator and adhesive tape are arranged on the second surface, rather than on any one surface of the positive electrode, so that cracks and short of the electrode can be prevented from occurring on either side.

The adhesive tape 180 according to an exemplary embodiment may include a porous base layer 181 and an adhesive layer 182 applied to one surface of the porous base layer. The adhesive layer 182 may be entirely stacked on one surface of the porous base layer 181, or the adhesive layer 182 may be stacked on only a portion of one surface of the porous base layer 181 in a pattern form.

The porous base layer 181 of the adhesive tape 180 may be the separator base layers 131 and 141 of the first separator 130 and the second separator 140. When the adhesive tape 180 includes the porous base layer and the adhesive layer 182, the adhesive layer 182 may include a material that facilitates migration of ions, specifically lithium ions, or the adhesive layer 182 may absorb an electrolyte solution and expand to form an ion migration path.

Therefore, the adhesive tape 180, like the separators 130 and 140, facilitates migration of ions between electrodes, and thus, can prevent lithium ions from precipitating even when the secondary battery 1 is charged/discharged.

Alternatively, for the porous base layer 181, one or more films selected from the group consisting of an acrylic film, a polyolefin film, a polyamide film, a polycarbonate film, a polyurethane film, a cellulose acetate film, and a polyester film may be used, for example, but the present application is not limited thereto.

When a polyester film is used as the porous base layer 181, one or more films selected from the group consisting of a polyethylene terephthalate film, a polyethylene naphthalate film and a polybutylene terephthalate film may be used, and when a cellulose-based porous base layer 181 is used as the porous base film, for example, a porous base layer 181 that includes, for example, a cellulose acetate resin or a cellulose alkylate resin, and is manufactured by applying a mixture including the resin to an extrusion or casting process may be used. As the cellulose alkylate, for example, cellulose acetate propionate, cellulose acetate butylate or the like may be used.

A method for manufacturing the porous base layer 181 by using the resin is not particularly limited, and, for example, a usual film or sheet forming method such as a method of extruding or casting a raw material including the resin, and as necessary, a known additive may be used.

When the porous base layer 181 as described above has a sheet or film shape, a thickness of the porous base layer 181 is not particularly limited, and may be, for example, about 10 to 200 um, about 10 to 100 um, about 10 to 50 um, about 15 to 30 µm, or about 15 to 20 um.

The adhesive layer may include polyethylene oxide (PEO, ether group). An electrostatic polar attraction acts between polyethylene oxide and the electrolyte solution, so the adhesive layer can attract the electrolyte solution flowing into the separator through the porous base layer and cause the electrolyte solution to be absorbed into the adhesive layer.

Specifically, the adhesive layer 182 may be represented by following Formula 1.

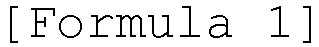

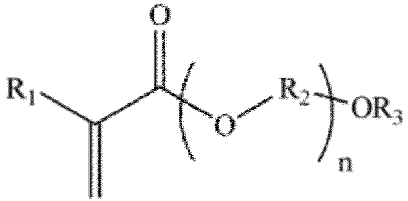

In Formula 1, R1 represents hydrogen or an alkyl group having 1 to 12 carbon atoms,
R2 represents an alkylene group having 1 to 6 carbon atoms,
R3 represents hydrogen, an alkyl group having 1 to 12 carbon atoms, an aryl group having 6 to 24 carbon atoms, or an arylalkyl group having 6 to 48 carbon atoms, and
n is 0 or greater.

In Formula 1, R1 is hydrogen or an alkyl group having 1 to 12, 1 to 8, or 1 to 4 carbon atoms, may be, for example, hydrogen, a methyl group, an ethyl group, a propyl group, a butyl group, a pentyl group, a hexyl group, or the like, and is preferably hydrogen or a methyl group, but is not limited thereto.

In addition, in Formula 1, R2 is an alkylene group having 1 to 6, 1 to 4, or 1 to 2 carbon atoms, and may be, for example, ethylene or propylene, but is not limited thereto.

R3 represents hydrogen; an alkyl group having 1 to 12, 1 to 8, 1 to 6, or 1 to 4 carbon atoms; an aryl group having 6 to 24, 6 to 20, 6 to 18, or 6 to 12 carbon atoms; or an arylalkyl group having 6 to 48, 6 to 30, 6 to 24, or 6 to 18 carbon atoms, and may be, for example, hydrogen, a methyl group, an ethyl group, a propyl group, a phenyl group, a naphthal group, a butylphenol group, a pentylphenol group, a hexylphenol group, a heptylphenol group, an octylphenol group, a nonylphenol group, or the like, but is not limited thereto.

In addition, n may be 0 or greater, for example, 1 or greater, preferably 2 or greater.

In the secondary battery 1 according to the present invention, which is illustrated in FIG. 3, the twofold first separator 130 and the adhesive tape 180 are overlapped on the second surface of the positive electrode 110 to prevent damage to the separator due to the step portion of the positive electrode and the internal short of the secondary battery 1. At the same time, the lithium ions of the positive electrode migrate to the negative electrode through the porous base layer and the electrolyte solution absorbed in the adhesive layer, so the secondary battery 1 according to the present invention can improve the problem of capacity reduction due to the adhesive layer.

Since the monomer represented by Formula 1 includes at least one oxygen atom and exhibits a very high polarity due to the high electronegativity of the oxygen atom, the adhesive layer including the monomer may have a high affinity with the polar electrolyte solution, and may expand when it comes into contact with the electrolyte. Meanwhile, the term "electrolyte solution" in the above may refer to, for example, a medium for ion conduction used in a secondary battery. In one example, the electrolyte may be an electrolyte solution that is a medium in a liquid state, but is not limited thereto. In the present specification, the electrolyte solution is also expressed as an electrolyte.

The adhesive tape 180 according to another exemplary embodiment may include a porous base layer 181 and a coating layer (not shown) obtained by applying slurry mixed with inorganic particles and a binder on one surface of the porous base layer 181. The adhesive tape 180 may have adhesive force due to the binder included in the coating layer. For example, for the adhesive tape 180, a method of mixing an organic solvent with slurry mixed with inorganic particles and a binder, coating the slurry on one surface of the porous base layer 181, and then adjusting process conditions just before drying to induce phase separation, thereby causing the binder acting as an adhesive to come to the surface, may be used.

The adhesive tape 180 according to another exemplary embodiment may include a porous base layer 181, a coating layer obtained by applying slurry mixed with inorganic particles and a binder on one surface of the porous base layer 181, and an adhesive layer 182 applied to one of one surface of the coating layer and the other surface of the porous base layer 181. Here, one surface of the coating layer on which the adhesive layer 182 is applied refers to an opposite surface to a surface in direct contact with the base layer. The adhesive layer may have the same structure as that of the adhesive tape 180 according to an exemplary embodiment.

The adhesive tape 180 may be determined such that the base layer 181 of the adhesive tape 180 and the positive electrode 110 can directly contact each other, or the adhesive layer 182 and the negative electrode 120 can directly contact each other.

With this configuration, the frictional force between the positive electrode 110 and the negative electrode 120 and the adhesive tape 180 can be increased to prevent the negative electrode 120 and the positive electrode 110 from sliding, thereby preventing a shape of the core part C from collapsing (core deformation).

The adhesive tape 180 may be bonded so that the coating layer and the adhesive layer are in direct contact with the second surface of the positive electrode 110, or may be bonded to one surface of the negative electrode 120 facing the second surface of the positive electrode 110. Alternatively, the adhesive tape 180 may be bonded to one surface of the first separator 130 where the coating layer and the adhesive layer are located between the second surface 110b of the positive electrode 110 and the negative electrode 120.

In the adhesive tape 180, the base layer, the coating layer, and the adhesive layer include a porous structure, allowing lithium ions of the negative electrode 120 to pass therethrough. Thereby, it is possible to minimize lithium precipitation even when the electrode assembly 100 is charged and discharged, and thus, to ensure the safety of the secondary battery.

In the adhesive tape 180 according to the present invention, a thickness of the porous base layer 181 may be 13 um or greater, and a thickness of the adhesive layer 182 may be greater than 0 um to 4 um. Preferably, the thickness of the porous base layer 181 may be 15 um or greater, and the thickness of the adhesive layer 182 may be greater than 0 um to 3 um. When the thickness of the porous base layer 181 is 13 um or greater, the overall thickness of the adhesive tape 180 becomes thick, which can prevent the end portion of the negative electrode or positive electrode from damaging or piercing the separator during core impingement. Since the thickness of the adhesive layer 182 is 4 um or less, the permeability of the electrolyte solution is high, and thus, the effect of increasing ion conductivity can be exhibited.

In addition, a length of the adhesive tape 180 may be 5 mm or greater. Preferably, the length of the adhesive tape 180 may be 10 mm or greater. Furthermore, the adhesive tape 180 may have an overlap length of 2 mm or greater with the positive electrode, and preferably may be 5 mm or greater.

The adhesive tape 180 has the porous base layer 181 facing the base layer 131 of the first separator, and the length of the porous base layer 181 and the base layer 131 of the first separator facing each other satisfies the above range, whereby electrode sliding is suppressed by the friction coefficient between the separator and the separator, and thus, the shape of the core part C can be prevented from collapsing.

In addition, since the overlapping length of the adhesive tape 180 and the positive electrode 110 satisfies the above range, the thickness of the region where the edge portion of the positive electrode is located increases, so that when the electrode assembly 100 undergoes contraction and expansion, the friction coefficient is increased and sliding of the electrode can be prevented by the pressing force of the adhesive tape 180 and the first separator 130.

The secondary battery 1 according to the present invention may include an electrode assembly 100, a battery case 200, and a cap assembly 300.

The secondary battery 1 may include an electrode assembly 100, a battery case 200, and a cap assembly 300.

The electrode assembly 100 is one according to the exemplary embodiments described above.

The battery case 200 may have a column structure with a space formed therein. The battery case 200 may accommodate the electrode assembly 100 including electrodes and a separator and an electrolyte solution (not shown) in the internal space. The battery case 200 may have a structure in which at least one side is open (hereinafter, referred to as an opening portion) and the other side is sealed. Here, one side and the other side of the battery case 200 refer to end portions located at an upper part and a lower part along a direction of gravity or a center axis of the battery case 200.

The opened upper side of the battery case 200 may be provided with a beading part 210 folded toward the center of the secondary battery 1. The battery case 200 may be provided with a crimping part 220 on an upper side of the beading part 210. That is, the crimping part 220 may be located on the uppermost side of the battery case 200. Here, the upper part refers to a region from the center of the battery case 200 toward the opening portion.

The battery case 200 may be made of a lightweight conductive metal material such as aluminum or aluminum alloy. And may have a cylindrical shape.

Preferably, the battery case 200 according to the present invention may have a cylindrical shape. Specifically, the battery case 200 may have a cylindrical, prismatic, or pouch shape depending on use applications. The battery case having a cylindrical shape may be more suitable for accommodating a jelly-roll type electrode assembly. When the battery case has a cylindrical shape, a shape of a secondary battery including the jelly-roll type electrode assembly and a battery case for accommodating the electrode assembly may have a cylindrical shape.

According to an exemplary embodiment of the present invention, the battery case may include an electrolyte therein. Specifically, the electrolyte may include an organic liquid electrolyte, an inorganic liquid electrolyte, a solid polymer electrolyte, a gel-type polymer electrolyte, a solid inorganic electrolyte, or a molten-type inorganic electrolyte that may be used in the manufacturing of the lithium secondary battery, but is not limited thereto. Specifically, the electrolyte may include a non-aqueous organic solvent and a metal salt.

According to an exemplary embodiment of the present invention, as the non-aqueous organic solvent, for example, an aprotic organic solvent such as N-methyl-2-pyrrolidinone, propylene carbonate, ethylene carbonate, butylene carbonate, dimethyl carbonate, diethyl carbonate, gamma-butyllolactone, 1,2-dimetoxy ethane, tetrahydrofuran, 2-methyltetrahydrofuran, dimethylsulfoxide, 1,3-dioxolane, formamide, dimethylformamide, dioxolane, acetonitrile, nitromethane, methyl formate, methyl acetate, phosphoric acid triester, trimethoxy methane, dioxolane derivative, sulfolane, methyl sulfolane, 1,3-dimethyl-2-imidazolidinone, propylene carbonate derivative, tetrahydrofuran derivative, ether, methyl propionate, or ethyl propionate may be used.

According to an exemplary embodiment of the present invention, a lithium salt may be used as the metal salt, and the lithium salt is a material that is readily soluble in the non-aqueous electrolyte solution, in which, for example, one or more species selected from the group consisting of F⁻, Cl⁻, I⁻, NO³-, N(CN)²⁻, BF⁴-, ClO⁴-, PF⁶-, (CF₃)₂PF⁴-, (CF₃)₃PF³₋, (CF₃)₄PF²-, (CF₃)₅PF-, (CF₃)₆P⁻, CF₃SO³-, CF₃CF₂SO³-, (CF₃SO₂)₂N⁻, (FSO₂)₂N⁻, CF₃CF₂(CF₃)₂CO⁻, (CF₃SO₂)₂CH⁻, (SF₅)₃C⁻, (CF₃SO₂)₃C⁻, CF₃(CF₂)₇SO₃⁻, CF₃CO₂⁻, CH₃CO₂⁻, SCN⁻ and (CF₃CF₂SO₂)₂N⁻ may be used as an anion of the lithium salt.

According to an exemplary embodiment of the present invention, one or more additives, for example, a haloalkylene carbonate-based compound such as difluoroethylene carbonate, pyridine, triethylphosphite, triethanolamine, cyclic ether, ethylenediamine, n-glyme, hexaphosphoric triamide, a nitrobenzene derivative, sulfur, a quinone imine dye, N-substituted oxazolidinone, N,N-substituted imidazolidine, ethylene glycol dialkyl ether, an ammonium salt, pyrrole, 2-methoxy ethanol, or aluminum trichloride, may be further included in the electrolyte for the purpose of improving the lifetime characteristic of the battery, suppressing a decrease in battery capacity, improving discharge capacity of the battery, and the like, in addition to the above-described electrolyte components.

The cap assembly 300 may be coupled to the opened surface of the battery case 200, and may include a top cap 310, a safety vent 320, and a current interruptive device 330.

The top cap 310 is located at the top of the cap assembly 300, and may protrude in an opposite direction to the center of the battery case 200. The top cap 310 may serve as an electrode terminal so that the protruding portion is electrically connected to the outside. For example, the top cap 310 may serve as a positive electrode terminal.

The top cap 310 may be coupled with a sealing gasket 340 at an edge of the top cap 310, and the sealing gasket 340 may be located inside the crimping part 220 of the battery case 200. The sealing gasket 340 can increase a sealing force between the top cap 310 and the battery case 200.

The top cap 310 may include a protrusion protruding upward, a rim portion that contacts and is coupled to the sealing gasket 340, and a first connection portion connecting the protrusion and the rim portion.

The safety vent 320 is located below the top cap 310 and may be electrically connected to the top cap 310. At least a portion of a surface of the safety vent 320 facing the top cap 310 may be in contact with the top cap 310. The safety vent 320 is in contact with the top cap 310 for a certain length from its end portion, and a portion excluding the contact length may be located at a certain distance away from the top cap 310. The portion of the safety vent 320 in contact with the top cap 310 may be coupled with the sealing gasket 340.

A spacing distance between the safety vent 320 and the top cap 310 may increase from a region in contact with the top cap 310 toward the center of the safety vent 320.

The safety vent 320 may include a contact portion in contact with the top cap 310, a central portion located at the center of the safety vent 320 and in contact with the current interruptive device, and a second connection portion connecting the contact portion and the central portion. The safety vent 320 may be provided with a bent portion (or notch) at a portion where the contact portion and the second connection portion and the second connection portion and the central portion are in contact.

In an exemplary embodiment, the safety vent 320 may have an end portion perpendicular to an axial direction of the battery case 200. In this case, the top cap 310 may be provided perpendicular to the axial direction of the battery case 200, like the safety vent 320. That is, the safety vent 320 and the top cap 310 can be located horizontally.

In another exemplary embodiment, the safety vent 320 may have an end portion bent to surround an outer circumferential surface of the top cap 310.

In the secondary battery 1 according to the present invention, gas is generated or heat is generated as the electrode assembly 100 accommodated inside the battery case 200 reacts with the electrolyte solution, thereby increasing an internal pressure.

When the internal pressure of the secondary battery 1 increases, the safety vent 320 receives force in a direction of the top cap 310, and the bent portion ruptures, causing the gas inside the secondary battery 1 to be discharged.

The current interruptive device (CID) 330 is located below the safety vent 320, and at least a portion thereof may be connected to the safety vent 320.

When the safety vent 320 ruptures as the internal pressure of the secondary battery 1 increases, the current interruptive device 330 is separated from the safety vent 320 to interrupt the current.

The current interruptive device 330 may include a connection portion connected to the safety vent 320 at a central portion and protruding in a direction in which the safety vent 320 is located, i.e., upwards toward a midpoint along the length of current interruptive device 330, an edge portion excluding the connection portion, and a coupling portion connecting the connection portion and the edge portion. The coupling portion includes a plurality of coupling portions, the plurality of coupling portions spaced apart from each other.

When the safety vent 320 is deformed in the direction in which the top cap 310 is located, the coupling portion may be disconnected and the connection portion may be separated from the edge portion. That is, the connection portion is separated in the direction of the top cap 310 while being connected to the safety vent 320.

A CID gasket 350 surrounds an edge of the current interruptive device 330 and can electrically separate the safety vent 320 from the edge portion and coupling portion other than the connection portion of the current interruptive device 330.

According to an exemplary embodiment of the present invention, a battery pack 3 including any one of the secondary batteries described above is provided.

In relation to the above exemplary embodiment, referring to FIG. 7, a battery pack 3 including the secondary battery 1 in a pack housing 2 is shown.

The battery pack according to the above exemplary embodiment has high output/high capacity.

According to an exemplary embodiment of the present invention, a moving means including the battery pack described above is provided.

In relation to the above exemplary embodiment, referring to FIG. 8, a moving means V including the battery pack 3 is shown.

Since the moving means according to the above exemplary embodiment uses the battery pack having high output/high capacity, the moving means is excellent in terms of stability and safety.

Although the present invention has been described with reference to preferred embodiments, it will be understood by one skilled in the art that various modifications and variations can be made in the present invention without departing from the technical spirit and scope of the present invention.

### [Mode for Invention]

### Examples

### Example 1

### <Preparation of Electrode Assembly>

A positive electrode having a thickness of 154 um was prepared by preparing an Al foil having a thickness of 15 um and a length of 63.9 mm in the width direction as a positive electrode current collector, and applying and drying a positive electrode active material slurry including an NMCA (Ni-Mn-Co-Al) composite having a Ni content of 92% or more as a positive electrode active material and CNTs as a conductive material on the positive electrode current collector to form a positive electrode active material layer.

Next, a negative electrode having a thickness of 187 um was prepared by preparing a Cu foil having a thickness of 8 um and a length of 65.1 mm in the width direction as a negative electrode current collector, and applying and drying a negative electrode active material slurry including artificial graphite and natural graphite as negative electrode active materials in 50 parts by weight, respectively, on the negative electrode current collector to form a negative electrode active material layer.

On the other hand, two separators each having a coating layer including Al₂O₃ as an inorganic component, a PVdF-based binder as a binder component, and a lithium salt and formed on one surface of a sheet-like polyethylene base layer were prepared as the first separator and the second separator, respectively.

Before winding a jelly-roll type electrode assembly, the base layers of the first separator and the second separator were overlapped such that the first and second base layers face each other, and the first separator and the second separator were arranged such that an overlapping portion, in which the first and second base layers face each other, extends long enough to wrap approximately three rotations around a winding core of an electrode assembly. These three rotations extend in a direction opposite a "winding direction," the "winding direction" being the direction the separators and electrodes are wound extending outward from a central core, rather than inward toward the central core. In the electrode assembly of FIG. 2, the winding direction is counterclockwise. The winding core may be a core of the jelly-roll electrode assembly with an outer circumference of approximately 10 mm.

After the first separator and the second separator have been wound approximately three turns toward the central core (C), the separators may be folded back over themselves to extend in the winding direction to start winding. The negative electrode and the positive electrode were sequentially introduced within the first and second separators with the negative electrode being introduced first, i.e., closer to the central core (C), to prepare a jelly-roll type electrode assembly. In this case, the core part of the jelly-roll type electrode assembly was formed to have a structure shown in FIGS. 2 and 3 by interposing the extensions of the first separator and the second separator between the second separators located on one surface of the positive electrode in the direction of the winding axis and on one surface of the negative electrode to provide a separator overlapping portion, and providing an adhesive tape on an opposite surface to the surface on which the extensions are interposed, i.e., between the first separator and the negative electrode.

In this case, the spacing distance L between the longitudinal end portion of the separator overlapping portion and the longitudinal end portion of the positive electrode was 3 mm, and the length (L+L'=2L), in the longitudinal direction, of the separator overlapping portion was controlled to be 6 mm. The circumference of the inner circumferential surface of the prepared jelly-roll type electrode assembly was about 10 mm.

The adhesive tape had a porous base layer thickness of 16 µm, an adhesive layer thickness of 3 um, and a length of 18 mm.

### Preparation of Secondary Battery

A secondary battery was prepared by inserting the jelly-roll type electrode assembly into a cylindrical battery case, injecting an electrolyte solution in which ethylene carbonate (EC), dimethyl carbonate (DMC), and ethyl methyl carbonate (EMC) were mixed at a weight ratio of 4:9:3 and LiPF₆ was dissolved to be 15 wt%, and sealing the cylindrical battery can with a cap assembly.

### Example 2

A jelly-roll type electrode assembly and a secondary battery were prepared in the same manner as in Example 1, except that an adhesive tape of 10 mm was used.

### Example 3

A jelly-roll type electrode assembly and a secondary battery were prepared in the same manner as in Example 1, except that an adhesive tape of 15 mm was used.

### Example 4

A jelly-roll type electrode assembly and a secondary battery were prepared in the same manner as in Example 1, except that an adhesive tape of 5 mm was used.

### Comparative Example 1

A jelly-roll type electrode assembly and a secondary battery were prepared in the same manner as in Example 1, except that the thickness of the porous base layer of the adhesive tape was 11 um and the thickness of the adhesive layer was 5 um.

### Comparative Example 2

A jelly-roll type electrode assembly and a secondary battery were prepared in the same manner as in Example 1, except that an adhesive tape was not attached between the first separator and the negative electrode.

### Experimental Examples

### Experimental Example 1- Core Impingement Evaluation

### Cycle stability evaluation depending on the thickness of the adhesive tape

The secondary batteries prepared in Example 1 and Comparative Example 1 were subjected to 2 cycles under conditions of 4.2 V-2.5 V, 0.2 C charging, and 0.2 C discharging, respectively, leading to preparation of activated secondary batteries. Thereafter, each of the activated secondary batteries was subjected to 50 cycles under conditions of 4.3 V-2.5 V 1 C/1 C @24°C. Then, for the short-term cycle stability evaluation, the core parts of the prepared secondary batteries were subjected to computed tomography (CT) to check presence or absence of the core impingement. The images are shown in FIGS 9.

### Cycle stability evaluation depending on the length of adhesive tape

The secondary batteries prepared in Example 1 and Comparative Example 2 were subjected to 2 cycles under conditions of 4.2 V-2.5 V, 0.2 C charging, and 0.2 C discharging, respectively, leading to preparation of activated secondary batteries. Thereafter, each of the activated secondary batteries was subjected to 50 cycles under conditions of 4.3 V-2.5 V 1 C/1 C @24°C. Then, for the short-term cycle stability evaluation, the core parts of the prepared secondary batteries were subjected to computed tomography (CT) to check presence or absence of the core impingement. The images are shown in FIGS 10.

### Core Impingement Evaluation

Whether the core impingement has occurred was evaluated for the secondary batteries of Example 1 and Comparative Example 1 by the following method.

FIG. 11 schematically shows a method for evaluating whether the core impingement has occurred. Specifically, FIG. 11(a) schematically shows a method for evaluating whether the core impingement has occurred when deformation occurred in the negative electrode, and FIG. 11(b) schematically shows a method for evaluating whether the core impingement has occurred when deformation did not occur in the negative electrode.
1) On the first surface of the positive electrode 110, a first extension line E1 is drawn by extending a straight line connecting the longitudinal end portion 110a of the positive electrode and a point 5 mm spaced from the end portion.

### 2-1) When the negative electrode is deformed

At the core part of the jelly-roll type electrode assembly, on the surface of the negative electrode 120 facing the first surface of the positive electrode, a second extension line E2 is drawn by extending a straight line connecting two points where a direction of curvature changes within a spacing distance of 5 mm from the longitudinal end portion 110a of the positive electrode.

### 2-2) When there is no deformation in the negative electrode

On the radially inner surface of the positive electrode 110, a first extension line E1 is drawn by extending a straight line connecting the longitudinal end portion 110a of the positive electrode and a point 5 mm spaced from the end portion.

At the core part of the jelly-roll type electrode assembly, on the surface of the negative electrode 120 facing the first surface of the positive electrode, a second extension line E2 is drawn by extending a straight line connecting two points 5 mm spaced from the longitudinal end portion 110a of the positive electrode.

3) When an angle from the first extension line E1 to the second extension line E2 in a counterclockwise direction with respect to the intersection of the first extension line E1 and the second extension line E2 exceeded 25°, it was evaluated that the core impingement occurred.

On the other hand, in the case where an unknown secondary battery (unknown cell) is acquired, the above method for evaluating whether the core impingement has occurred may be applied in a manner of evaluating whether the core impingement has occurred at the time of initial acquisition, reevaluating whether the core impingement has occurred after 50 cycles, and comparing and analyzing the result with the core impingement conditions of the secondary battery of the exemplary embodiment according to the present invention.

FIG. 9 is a CT image showing results of the cycle stability evaluation of the secondary batteries according to Example 1 and Comparative Example 1, depending on the thickness of the adhesive tape, and FIG. 10 is a CT image showing results of the cycle stability evaluation of the secondary batteries according to of Examples 1 to Example 4 and Comparative Example 2, depending on the length of the adhesive tape.

Referring to FIGS. 9 and 10, it was confirmed that core impingement did not occur in the secondary battery prepared in Example 1, in the cycle stability evaluation depending on the thickness of the adhesive tape and the cycle stability evaluation depending on the length, and that core impingement did not occur in the secondary batteries prepared in Examples 2 to 4, in the cycle stability evaluation depending on the length of the adhesive tape.

It was confirmed that core impingement occurred in the secondary battery prepared in Comparative Example 1, in the cycle stability evaluation depending on the thickness, and that core impingement occurred in the secondary battery prepared in Comparative Example 2, in the cycle stability evaluation depending on the length.

Specifically, it can be confirmed that in both Comparative Example 1 and Comparative Example 2, core impingement did not occur or core impingement occurred a little after activation. After 50 cycles, it was confirmed that the damage to the negative electrode and separator by the longitudinal end portion of the positive electrode, i.e., the occurrence frequency and degree of core impingement due to contraction/expansion of the electrode assembly considerably increased in Comparative Example 1 and Comparative Example 2.

In Example 1, the thickness of the porous base layer is thick, so the puncture strength is higher than that of Comparative Example 1, and therefore, puncture of the first separator located between the positive electrode and the negative electrode due to the positive electrode and the negative electrode can be prevented.

In addition, in Example 1 and Comparative Example 1, the electrolyte solution permeability was confirmed by placing a specimen whose color changes upon contact with the acidic component of the electrolyte solution between the adhesive layer and the porous base layer. As a result, in Example 1, the adhesive layer was provided with a thin thickness, ensuring ion conductivity through the adhesive tape, and thus, it was confirmed that the specimen between the porous base layer and the adhesive layer was changed to red.

In addition, Example 1 can reduce core impingement by increasing the frictional force (stress) between the negative electrode and the separator when the negative electrode is moved as the cycle proceeds, due to the thickness of the adhesive tape.

It was confirmed that the secondary batteries prepared in Examples 2 to 4 had a slight difference in core impingement after activation and after 50 cycles. In particular, it was confirmed that when the overlapping length of the adhesive tape and the positive electrode was 5 mm or greater, the core impingement was 89% or higher.

With this, it can be seen that when the thickness of the adhesive tape between the first separator and the negative electrode is 19 um or greater and the length is 5 mm or greater, a higher friction coefficient can be achieved, as compared with a case where the adhesive tape is not located between the first separator and the negative electrode or the thickness of the adhesive tape is less than 19 um, and the sliding of the electrode is suppressed, so the effect of preventing damage to the negative electrode and separator is excellent even when the electrode undergoes contraction/expansion.

The foregoing detailed description is intended to illustrate and explain the present invention. In addition, the foregoing description is only to show and describe the preferred embodiment of the present invention, and as described above, the present invention can be used in various other combinations, changes and environments, and can be changed and modified within the scope of the concept of the invention disclosed in the present specification, within the scope equivalent to the above disclosure and/or within the scope of skill or knowledge in the art. Accordingly, the foregoing detailed description of the invention is not intended to limit the invention to the disclosed embodiments. Also, the appended claims should be construed to include other embodiments as well.

## Claims

1. A jelly-roll type electrode assembly in which a first separator, a negative electrode, a second separator, and a positive electrode are sequentially stacked and wound,
wherein the positive electrode has a first surface in a direction of a winding axis of the jelly-roll type electrode assembly, and a second surface opposite to the first surface,
wherein the core part of the electrode assembly comprises a separator overlapping portion in which the first separator and the second separator are overlapped and arranged in three or more folds between the positive electrode and the negative electrode facing the first surface of the positive electrode, and
wherein an adhesive tape is located between the positive electrode and the first separator facing the second surface of the positive electrode or between the negative electrode and the first separator adjacent to the second surface of the positive electrode.

2. The electrode assembly of claim 1, wherein the first separator, the negative electrode, and the second separator each have a greater length than a length of the positive electrode.

3. The electrode assembly of claim 1, wherein the separator overlapping portion is defined as a region extending in both the first and second directions from a terminal end of the positive electrode.

4. The electrode assembly of claim 1, wherein the first separator and the second separator are bent together in the core to extend in a second direction opposite the first direction to extend between the inner surface of the positive electrode and an outer surface of the second separator.

5. The electrode assembly of claim 1, wherein the separator overlapping portion includes a first interface in which the second separator extending in a first direction and the second separator extending in the second direction directly contact each other, and a second interface in which the second separator extending in the first direction and the first separator extending in the first direction directly contact each other, and
wherein the first interface and the second interface each have a friction coefficient of at least 0.4.

6. The electrode assembly of claim 5, wherein the friction coefficient of the first interface is 0.6 or greater, and the friction coefficient of the second interface is 0.4 or greater.

7. The electrode assembly of claim 5, wherein the first separator and the second separator each comprise a coating layer provided on at least one of the respective inner and outer surfaces thereof, such a friction coefficient of the coating layer is higher than a friction coefficient of an uncoated portion of at least one of the inner and outer surfaces of the first and second separators.

8. The electrode assembly of claim 5, wherein the first separator and the second separator each comprise a coating layer provided on at least one of the respective inner and outer surfaces thereof, the coating layer including an inorganic component, a binder component, and a lithium salt.

9. The electrode assembly of claim 5, wherein the first separator and the second separator each comprise a coating layer provided on at least one of the respective inner and outer surfaces thereof,
wherein the first interface is defined between the coating layer of the second separator extending in the first direction and the coating layer of the second separator extending in the second direction such that each coating layer at the first interface directly contacts the other.

10. The electrode assembly of claim 5, wherein the first separator and the second separator each comprise a coating layer provided on at least one of the respective inner and outer surfaces thereof,
wherein the second interface is defined between an uncoated surface of the second separator and an uncoated surface of the first separator such that each uncoated layer at the second interface directly contacts the other.

11. The electrode assembly of claim 5, wherein the first interface is defined between a portion of the second separator abutting the negative electrode and a portion of the second separator abutting the first separator.

12. The electrode assembly of claim 5, wherein the second interface is defined between a portion of the first separator abutting a terminal end of the positive electrode and a portion of the second separator spaced away from a terminal end of the positive electrode by the portion of the first separator.

13. The electrode assembly of claim 1, wherein the separator overlapping portion extends at least approximately 108° around a circumference of the electrode assembly.

14. The electrode assembly of claim 1, wherein the separator overlapping portion has a first end extending in a first direction away from a terminal end of the positive electrode and a second end extending in a second, opposite direction from the terminal end of the positive electrode, wherein at least one of the first and second ends extends away from the terminal end of the positive electrode by at least 3 mm.

15. The electrode assembly of claim 1, wherein the adhesive tape comprises a porous base layer and an adhesive layer on the porous base layer.

16. The electrode assembly of claim 15, wherein the porous base layer has a thickness of 13 um or greater, and the adhesive layer has a thickness of greater than 0 um and 4 um or less.

17. The electrode assembly of claim 1, wherein the adhesive tape has a length of 5 mm or greater.

18. A secondary battery comprising:
the electrode assembly of any one of claims 1 to 17;
a battery case opening to at least one surface and configured to accommodate the electrode assembly; and
a cap assembly coupled to the battery case opening surface.

19. The secondary battery of claim 18, wherein the battery case has a cylindrical shape.
